# EUROPEAN PATENT SPECIFICATION

(11) **EP 2 043 849 B1**
(45) Date of publication and mention of the grant of the patent: **15.09.2010**
(21) Application number: 07787916.1
(22) Date of filing: 25.07.2007
(51) Int. Cl.: B29D 30/56

(54) **CUSHION COMPOUND FOR COLD-RETREADING TYRES**
KISSENVERBINDUNG FÜR KALTRUNDERNEUERUNG VON REIFEN
COMPOSÉ DE REMBOURRAGE POUR RECHAPAGE À FROID DE PNEUMATIQUE

(30) Priority: 26.07.2006 IT TO20060552
(43) Date of publication of application: 08.04.2009
(73) Proprietor: Bridgestone Corporation, Tokyo 104-8340 (JP)
(72) Inventor: RICCARDI, Andrea, 1205 Geneva (CH)
(74) Representative: Bosman, Cesare
(86) International application number: PCT/EP2007/057690
(87) International publication number: WO 2008/012337

(56) References cited:
- GB-A- 1 150 809
- US-A- 3 812 216
- US-A- 4 046 947
- US-A- 4 725 649
- US-A- 5 503 940

## Description

### TECHNICAL FIELD

The present invention relates to a cushion compound for cold-retreading tyres.

The term "cross-linkable unsaturated-chain polymer base" is intended to mean any natural or synthetic non-cross-linked polymer capable of assuming all the typical chemical, physical, and mechanical characteristics of elastomers when cross-linked (cured) with sulphur-based systems.

### BACKGROUND ART

When a tyre tread wears out, the rest of the tyre is normally still capable of ensuring original performance. So, obviously, disposing of tyres with worn treads is not only economically wasteful, but also harmful ecologically.

By way of a solution to the problem, so-called retreaded tyres are now commonly produced, by replacing the tread on a used carcass.

There are two main tyre retreading techniques : hot and cold retreading.

Cold retreading is so-called on account of the low retreaded tyre curing temperatures employed (80-130°C), and has the advantage over hot retreading of avoiding thermal stress of the used tyre carcass, and of being applicable to any type of tread (different tread patterns). Examples for the cold retreading method can be found in US 4,046,947 and GB 1,150,809.

Cold retreading comprises inserting a green-rubber connecting layer or so-called "cushion" between the cleaned carcass and the new tread, the mating surface of which is coated with a layer of adhesive compound (so-called "cement"). The cement and cushion ensure adhesion of the new tread to the carcass following cold curing; and the cushion normally comprises a cross-linkable polymer base, a curing system, and a so-called "tackifier resin".

Cold retreading has the major drawback of employing organic-solvent-based cements.

Recent European regulations have imposed a drastic reduction in the use of organic solvents in the tyre industry, thus forcing tyre manufacturers to seek alternative ways of ensuring firm adhesion of the rubber layers.

A demand therefore exists for a cold tyre retreading technique employing no cement, but without impairing adhesion of the new tread to the tyre carcass.

### DISCLOSURE OF INVENTION

According to the present invention, there is provided a cushion compound for cold-retreading tyres, comprising a polymer base, a reinforcing filler, a curing system, and a tackifier resin; said cushion compound being characterized in that said tackifier resin is a para-t-butylphenolacetylene resin, and is present in an amount ranging between 4 and 8 phr.

The cushion compound preferably comprises an aromatic-hydrocarbon resin.

The cushion compound preferably comprises between 0.5 and 5 phr of aromatic-hydrocarbon resin.

The following non-limiting examples are purely indicative, for a clear understanding of the invention.

Three compounds (A, B, C) in accordance with the teachings of the present invention, and two control compounds (D, E) were produced. As shown in Table I, the five compounds A-E differ solely as to the type and quantity of tackifier resin.

More specifically, the compounds were prepared as follows:

### (1st mixing step)

Before mixing was commenced, a roughly 2.15-litre, tangential-rotor mixer was loaded, to a fill factor of 66-72%, with natural rubber, carbon black, zinc oxide, stearic acid, antioxidants, and tackifier resin.

The mixer was run at a speed of 60-80 rpm, and the resulting mixture was unloaded on reaching a temperature of 140-160°C.

### (2nd mixing step)

The mixture from the first step was mixed again in a mixer run at a speed of 60-80 rpm, and was unloaded on reaching a temperature of 130-150°C and a fill factor of 70%.

### (3rd mixing step)

The curing system was added to the mixture from the second step to a fill factor of 63-67%.

The mixer was run at a speed of 20-40 rpm, and the resulting mixture was unloaded on reaching a temperature of 100-110°C.

In Table I, the component quantities are indicated in phr (parts per hundred parts of polymer base).

**TABLE I**

| | A | B | C | D | E |
|---|---|---|---|---|---|
| Natural rubber | 100 | | | | |
| Carbon black | 40 | | | | |
| Zinc oxide | 5 | | | | |
| Stearic acid | 1 | | | | |
| Antioxidants | 5 | | | | |
| Sulphur | 2.5 | | | | |
| Accelerants | 1 | | | | |
| Aromatic-hydrocarbon resin | 2 | 2 | 2 | 9 | 2 |
| Alkylphenol-formaldehyde resin | - | - | - | - | 7 |
| Para-t-butylphenolacetylene resin | 4 | 7 | 10 | - | - |

More specifically, control compounds D and E relate to standard compounds used in combination with cement.

Compounds A-E were laboratory tested.

Table II shows, for each of compounds A-E, the rheometric values, as per ASTM Standard D5289 (Mh, t10, t90), of curing tests of the compound at 160°C, and tackiness values as per ASTM Standard D413-98.

**TABLE II**

| | A | B | C | D | E |
|---|---|---|---|---|---|
| Mh (dNxm) | 11.9 | 10.9 | 10.7 | 10.4 | 10.4 |
| t10 | 0.66 | 0.69 | 0.68 | 0.70 | 0.74 |
| t90 | 1.32 | 1.36 | 1.35 | 1.39 | 1.40 |
| Tackiness (g) | 173 | 229 | 248 | 100 | 127 |

As shown clearly in Table II, the compounds according to the present invention have a much higher tackiness level than the control compounds, but without substantially affecting the physical properties of the compound.

Table III shows the tackiness and peeling test values, as per ASTM Standard D1876-01, of compound D in combination with a standard cement, and of compound B in combination with and without standard cement.

**TABLE III**

| | Compound D with cement | Compound B with cement | Compound B without cement |
|---|---|---|---|
| Tackiness (g) | 100 | 233 | 200 |
| Peeling force (N/mm) | 20 | 20 | 22 |

To better assess Table III, it should be pointed out that the tackiness test refers to adhesion of the green cushion compound to a cured part of the tyre for rereading, and so indicates the characteristics of the tyre being retreaded; whereas the peeling test refers to adhesion of the cured cushion compound to other cured parts of the retreaded tyre, and so indicates the characteristics of the finished, i.e. retreaded, tyre.

As shown in Table III, without cement, the compound according to the present invention maintains high tackiness values, while improving peeling force.

Table IV shows the test results of actual retreading of the tyre with compound D (standard) with cement, compound D without cement, and compound B without cement.

**TABLE IV**

| | Compound D with cement | Compound D without cement | Compound B without cement |
|---|---|---|---|
| Retreading problems | NO | YES | NO |
| Peeling FORCE (Kgf/25mm) | 40 | - | 65 |

As shown in Table IV, without cement, the compound according to the present invention is the only one capable of ensuring cold retreading of the tyre.

## Claims

1. A cushion compound for cold retreading tyres, comprising a polymer base, a reinforcing filler, a curing system, and a tackifier resin; said cushion compound being **characterized in that** said tackifier resin is a para-t-butylphenolacetylene resin, and is present in an amount ranging between 4 and 8 phr.

2. A compound as claimed in Claim 1 or 2, **characterized by** comprising an aromatic-hydrocarbon resin.

3. A compound as claimed in Claim 3, **characterized by** comprising 0.5 to 5 phr of said aromatic-hydrocarbon resin.

4. A tyre retreaded using the cold retreading technique, and **characterized by** comprising a cushion compound as claimed in one of the foregoing Claims.

## Patentansprüche

1. Ein Kissenverbund für die Kaltrunderneuerung von Reifen, umfassend eine Polymer-Basis, eine verstärkende Füllung, ein Aushärtesystem und ein klebrig machendes Harz, wobei der Kissenverbund **dadurch gekennzeichnet ist, dass** das klebrig machende Harz ein para-t-Batylphenolacetylen-Harz ist, und in einer Menge zwischen 4 und 8 phr vorliegt.

2. Verbund nach Anspruch 1, **dadurch gekennzeichnet, dass** er ein aromatisches Kohlenwasserstoffharz umfasst.

3. Verbund nach Anspruch 2, **dadurch gekennzeichnet, dass** er 0,5 bis 5 phr des aromatischen Kohlenwasserstoffharzes umfasst.

4. Ein unter Verwendung der Kaltrundemeuenrungstechnologie runderneuerter Reifen, **dadurch gekennzeichnet, dass** er einen Kissenverbund nach einem der vorherigen Ansprüche umfasst.

## Revendications

1. Composé de rembourrage pour rechapage de pneumatiques à froid, comprenant une base polymère, une charge de renforcement, un système de durcissement, et une résine poisseuse ; ledit composé de rembourrage étant **caractérisé en ce que** ladite résine poisseuse est une résine para-t-butylphénolacétylène, et est présente en une quantité se trouvant dans la plage de 4 à 8 phr.

2. Composé comme revendiqué dans la revendication 1
**caractérisé par** le fait de comprendre une résine d'hydrocarbures aromatiques.

3. Composé comme revendiqué dans la revendication 2, **caractérisé par** le fait de comprendre 0,5 à 5 phr de ladite résine d'hydrocarbures aromatiques.

4. Pneumatique rechapé en utilisant la technique de rechapage à froid, et **caractérisé par** le fait de comprendre un composé de rembourrage comme revendiqué dans l'une des revendications précédentes.
